# EUROPEAN PATENT APPLICATION

(11) **EP 2 607 723 A1**
(43) Date of publication of application: **26.06.2013**
(21) Application number: 11194321.3
(22) Date of filing: 19.12.2011
(51) Int. Cl.: F16B 31/02

(54) **Torque nut**

(71) Applicant: Ensto Finland Oy, 06101 Porvoo (FI)
(72) Inventor: Toivanen, Antti, 06150 Porvoo (FI)
(74) Representative: LEITZINGER OY

(57) **Abstract**

The invention relates to a torque nut, including a torsion element (1), which has its external surface shaped for engagement with a torsion tool, and an opening (2) for a screw, which has an internal thread (3) for engagement with a thread of the screw. The nut has a fraction point, which is established by a weakening groove (4) and which, upon fracturing, divides the nut into two pieces, one having the torsion element (1) and the other said internal thread (3). Between the torsion element (1) and the thread (3) lies an annular space (5) opening to a top end of the nut and having its bottom (6) at or alongside the weakening groove (4). The internal thread (3) extends over a substantial portion of the height of the annular space (5). The annular space (5) can be made in the form of tubular bore.

## Description

The invention relates to a torque nut, including a torsion element, which has its external surface shaped for engagement with a torsion tool, and an opening for a screw, which has an internal thread for engagement with a thread of the screw, as well as a fraction point, which is established by a weakening groove and which, upon fracturing, divides the nut into two pieces, one having the torsion element and the other said internal thread.

Such a torque nut is known from the Applicant's patent publication FI-102120.

It is an object of the invention to further develop this prior known torque nut for a substantial saving in material costs.

This object is achieved on the basis of characterizing features as presented in the appended claim 1. Preferred embodiments of the invention are presented in the dependent claims.

In a construction of the invention, the weakening groove and the torque nut's breaking point established thereby can be located in the internal thread region, e.g. half-way down the thread or even below that, whereby a larger part of the nut's height, even the total height of the nut, if desired, can be utilized for making the internal thread. Consequently, the total height of the nut can be substantially less than before with a saving of as much as 40% in material costs over the prior art.

Two exemplary embodiments of the invention will now be described more closely with reference to the accompanying drawings, in which
- Fig. 1: shows a torque nut of the invention in cross-section, the section being taken on a line I-I of fig. 2.
- Fig. 2: shows the same nut in a plan view, and
- Fig. 3: shows the same nut axonometrically.
- Figs. 4-6: illustrate a second embodiment of the invention in views similar to those of figs. 1-3 for the first embodiment of the invention. The only difference between the illustrated embodiments is that an annular space 5 is deeper in the second embodiment than in the first one and the location of a weakening groove 4 is respectively further down.

The torque nut includes a torsion element 1, having its external surface 7 shaped for engagement with a torsion tool. The nut has an opening 2 for a screw, provided with an internal thread 3 for engagement with a thread of the screw. In addition, the nut has a breaking point, which is established by a weakening groove 4 and which, upon fracturing or breaking, divides the nut into two pieces, one of which has the torsion element 1 and another nut portion 9 has the internal thread 3.

What is novel about the invention is that between the torsion element 1 and the thread 3 lies an annular space 5 opening to a top end of the nut and separating the internally unthreaded torsion element 1 for its complete removal from the internally threaded nut portion 9. A bottom 6 of the annular space 5 is located at or alongside the weakening groove 4. By virtue of the annular space 5, the internal thread 3 is able to extend over a substantial portion of the height of the annular space 5 and respectively over a substantial portion of the nut's total height. In the illustrated case, the thread 3 extends essentially over the entire height of the nut. The advantage provided by the invention is also achieved when the thread extends continuously over more than 70% or preferably more than 75% of the nut's height. Hence, the nut portion inward of the annular space 5, and respectively the thread 3, need not cover the nut's entire height as long as the thread 3 has a length which is sufficient, e.g. consistent with an intended application standard.

The annular space 5 can be preferably made in the form of a tubular bore. The annular space 5 has a depth which is preferably at least a half of the nut's height. The weakening groove 4 is located at the outer surface of the torque nut and surrounds the bottom area of the annular space 5.

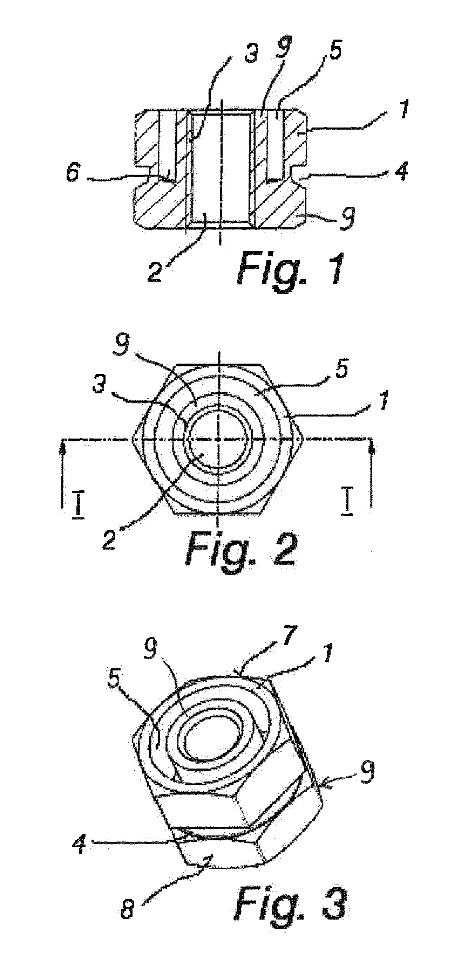

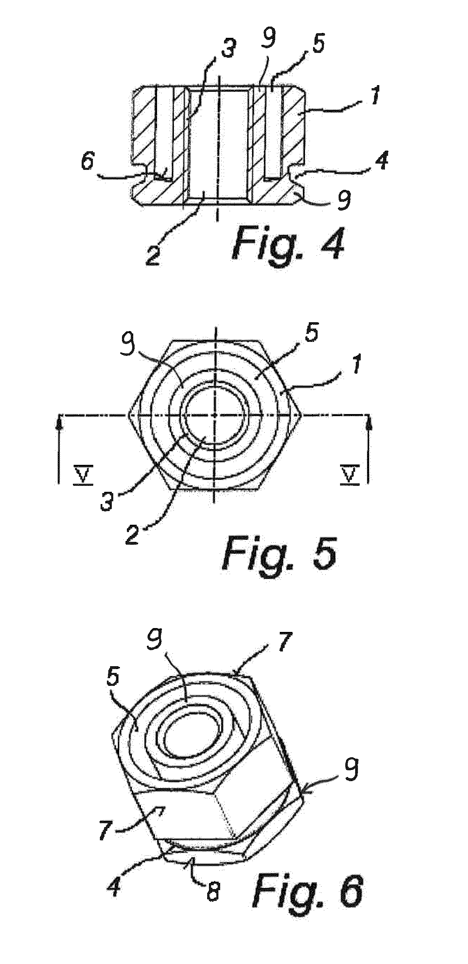

In the illustrated exemplary embodiments, the nut's external surface 7, 8 is shaped for engagement with a torsion tool on both sides of the weakening groove 4. However, in applications not requiring the removal of a tightened nut, the engagement shaping for a tool is only needed above the weakening groove 4. In this case, the surface 8 below the weakening groove 4 can be without a possibility of tool engagement. In the illustrated case, the surfaces 7 and 8 are shaped for a hexagon nut. In the embodiment of figs. 4-6, however, the surface 8 is not necessarily sufficient for a removal of the nut. In applications requiring a removal of the nut, it is necessary to use the embodiment of figs. 1-3.

As visible in figs. 1 and 4, the nut has its thinnest material thickness between a bottom of the weakening groove 4 and an outer wall of the annular space 5. What is essential is that the annular space 5 has its bottom 6 extending at least to the proximity of the weakening groove 4 or beyond the weakening groove 4. The annular space 5 has a depth which is typically over 50%, preferably over 60% of the nut's height, whereby a minimum length of the thread 3 is achievable with a relatively low-profile nut.

## Claims

1. A torque nut, including a torsion element (1), which has its external surface shaped for engagement with a torsion tool, and an opening (2) for a screw, which has an internal thread (3) for engagement with a thread of the screw, as well as a fraction point, which is established by a weakening groove (4) and which, upon fracturing, divides the nut into two pieces, one having the torsion element (1) and the other (9) said internal thread (3), **characterized in that** between the torsion element (1) and the thread (3) lies an annular space (5) opening to a top end of the nut and separating the internally unthreaded torsion element (1) for its complete removal from the internally threaded nut portion (9), that a bottom (6) of the annular space (5) is located at or alongside the weakening groove (4), and that the internal thread (3) extends over a substantial portion of the height of the annular space (5).

2. A nut as set forth in claim 1, **characterized in that** the annular space (5) is made in the form of tubular bore.

3. A nut as set forth in claim 1 or 2, **characterized in that** the annular space (5) has a depth which is at least a half of the nut's height.

4. A nut as set forth in any of claims 1-3, **characterized in that** the internal thread (3) extends continuously over more than 70% of the nut's total height, preferably substantially over the nut's entire height.

5. A nut as set forth in any of claims 1-4, **characterized in that** the nut's external surface (7, 8) is shaped for engagement with a torsion tool on both sides of the weakening groove (4).

6. A nut as set forth in any of claims 1-5, **characterized in that** the nut has its thinnest material thickness located between a bottom of the weakening groove and an outer wall of the annular space (5).
